# EUROPEAN PATENT APPLICATION

(11) **EP 3 556 615 A1**
(43) Date of publication of application: **23.10.2019**
(21) Application number: 18194163.4
(22) Date of filing: 13.09.2018
(51) Int. Cl.: B60S 1/38

(54) **WIPER BLADE RUBBER STRIP**

(30) Priority: 20.04.2018 CN 201810360584
(71) Applicant: Shengzhu, Wu, 361000 Xiamen Fujian (CN)
(72) Inventor: Shengzhu, Wu, 361000 Xiamen Fujian (CN)
(74) Representative: Cabinet Chaillot

(57) **Abstract**

A wiper blade rubber strip includes a rubber strip body (1) made of a first rubber material and a blade portion (2) made of a second rubber material. The blade portion (2) is integrally formed with the rubber strip body (1) by co-extrusion. The rubber strip body (1) and the blade portion (2) are made of different materials to meet their respective performance requirements of the rubber strip body (1) and the blade portion (2).

## Description

### BACKGROUND OF THE INVENTION

### 1. Field of the Invention

The present invention relates to a windshield wiper, and in particular to a wiper blade rubber strip.

### 2. Description of the Prior Art

Various types of windshield wiper rubber strips on the market are generally formed of a rubber material by molding or extrusion molding. After molding, the overall material and performance of the wiper strip blade rubber strips are the same. However, the performance requirements of the blade portion and the rubber strip body of the wiper blade rubber strip are different from each other. For example, in the first case, the hardness of the rubber strip body is required to be strong, so that the mechanical strength of the rubber strip body can be sufficient for the rubber strip body to be firmly fixed to the frame of the windshield wiper; the hardness of the blade portion is required to be low, so that the blade portion has good deformability in close contact with the windshield. In the second case, the tear resistance and wear resistance requirements of the blade portion of the wiper blade rubber strip are higher than the tear resistance and wear resistance of the rubber strip body. The higher the tear resistance and wear resistance are, the higher the cost of the material is. It is difficult to reduce the material cost while ensuring the performance of the wiper blade rubber strip.

Accordingly, the inventor of the present invention has devoted himself based on his many years of practical experiences to solve these problems.

### SUMMARY OF THE INVENTION

The primary object of the present invention is to provide a wiper blade rubber strip, wherein a rubber strip body and a blade portion are made of different materials so as to meet the respective performance requirements of the rubber strip body and the blade portion.

In order to achieve the aforesaid object, the present invention adopts the following technical solutions:
According to one aspect of the present invention, a wiper blade rubber strip is provided. The wiper blade rubber strip comprises a rubber strip body made of a first rubber material and a blade portion made of a second rubber material. The blade portion is integrally formed with the rubber strip body by co-extrusion.

Preferably, the first rubber material has a Shore A hardness of 63-70 degrees, and the second rubber material has a Shore A hardness of 58-65 degrees.

Preferably, the first rubber material is a silicone rubber, and the second rubber material is a fluorosilicone rubber.

Preferably, the first rubber material has a color different from that of the second rubber material.

Preferably, the color of the first rubber material is black, and the color of the second rubber material is white.

Preferably, the blade portion has a height of 1-3 millimeters.

Preferably, respective surfaces of the blade portion and the rubber strip body are coated with a lubricating protection layer.

With the above solutions, the present invention has the following advantages:
1. The rubber strip body and the blade portion of the present invention are made of the first rubber material and the second rubber material to meet their respective performance requirements of the rubber strip body and the blade portion. The blade portion is integrally formed with the rubber strip body by co-extrusion, so that the blade portion and the rubber strip body can be tightly coupled.
2. The first rubber material of the present invention has a Shore A hardness of 63-70 degrees, and the second rubber material has a Shore A hardness of 58-65 degrees. In this way, the mechanical strength of the rubber strip body is strong, and the flexibility of the blade portion is good.
3. The first rubber material is a silicone rubber, and the second rubber material is a fluorosilicone rubber, which makes the blade portion have better wear resistance and tear resistance than the rubber strip body. The cost of the silicone rubber is lower than the cost of the fluorosillicone rubber, so the present invention is advantageous to reduce the overall material cost of the wiper blade rubber strip of the present invention while ensuring the performance of the wiper blade rubber strip of the present invention.
4. The color of the first rubber material is different from that of the second rubber material so that the color of the blade portion is different from that of the rubber strip body, thereby facilitating the user to directly observe the wear condition of the blade portion to determine whether or not to replace the wiper blade rubber strip.

### BRIEF DESCRIPTION OF THE DRAWINGS

FIG. 1 is a side view of the wiper blade rubber strip of the present invention; and
FIG. 2 is a sectional view of the wiper blade rubber strip of the present invention.

### DETAILED DESCRIPTION OF THE PREFERRED EMBODIMENTS

Embodiments of the present invention will now be described, by way of example only, with reference to the accompanying drawings.

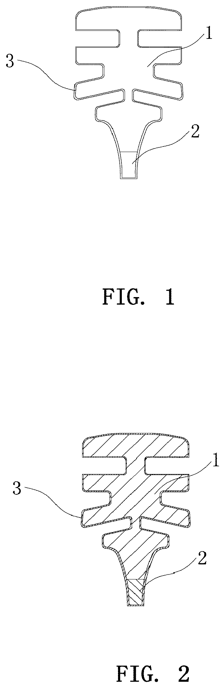

With reference to FIG. 1 and FIG. 2, the present invention discloses a wiper blade rubber strip, comprising a rubber strip body 1 made of a first rubber material and a blade portion 2 made of a second rubber material. The blade portion 2 is integrally formed with the rubber strip body 1 by co-extrusion.

Compared with the conventional wiper blade rubber strip made of the same material, the rubber strip body 1 and the blade portion 2 of the present invention can select different rubber materials according to their different performance requirements to meet their respective performance requirements. The blade portion 2 is integrally formed with the rubber strip body 1 by co-extrusion, so that the blade portion 2 and the rubber strip body 1 can be tightly coupled.

Specifically, the first rubber material has a Shore A hardness of 63-70 degrees, and the second rubber material has a Shore A hardness of 58-65 degrees. In this way, the mechanical strength of the rubber strip body 1 is strong and the flexibility of the blade portion 2 is good, so that the rubber strip body 1 can be firmly fixed on the frame of a windshield wiper, and the blade portion 2 can be in close contact with the windshield. The first rubber material may be a silicone rubber, and the second rubber material may be a fluorosilicone rubber, which makes the blade portion 2 have better wear resistance and tear resistance than the rubber strip body 1. The cost of the silicone rubber is lower than the cost of the fluorosillicone rubber, so the present invention is advantageous to reduce the overall material cost of the wiper blade rubber strip of the present invention while ensuring the performance of the wiper blade rubber strip of the present invention. According to the present invention, the first rubber material is not limited to the silicone rubber and the second rubber material is not limited to the fluorosillicone rubber. The first rubber material and the second rubber material may be other different rubber materials, as long as the properties of the first rubber material and the second rubber material can respectively meet the respective performance requirements of the rubber strip body 1 and the blade portion 2.

Furthermore, the color of the first rubber material is different from that of the second rubber material so that the color of the blade portion 2 is different from that of the rubber strip body 1, thereby facilitating the user to directly observe the wear condition of the blade portion 2 to determine whether or not to replace the wiper blade rubber strip. The color difference of the first rubber material and the second rubber material may be achieved by adding different colorants. The colors of the first rubber material and the second rubber material may be black and white, respectively. The color of the rubber strip body 1 is black and the color of the blade portion 2 is white, so that the color difference between the blade portion 2 and the rubber strip body 1 is distinct. Preferably, the blade portion 2 has a height of 1-3 millimeters, meeting the use requirements of a general windshield wiper.

Furthermore, the surfaces of the blade portion 2 and the rubber strip body 1 are coated with a lubricating protection layer 3. The blade portion 2 and the rubber strip body 1 can be protected by the lubricating protection layer 3, so that the surface of the wiper blade rubber strip of the present invention is smooth. When the lubricating protection layer 3 on the surface of the blade portion 2 is abraded, the blade portion 2 will be exposed. The user can see the color of the blade portion 2 to observe the wear of the blade portion 2.

The present invention also provides a method for manufacturing the wiper blade rubber strip. The method comprises:
Step 1: mixing and thinning the raw material of the first rubber material and the raw material of the second rubber material respectively to form the first rubber material and the second rubber material;
Step 2: the first rubber material and the second rubber material being integrally formed by means of a co-extrusion process to form a wiper blade rubber strip semi-finished product, wherein the rubber strip body 1 of the wiper blade rubber strip semi-finished product is made of the first rubber material, and the blade portion 2 of the wiper blade rubber strip semi-finished product is made of the second rubber material;
Step 3: heat-vulcanizing the wiper blade rubber strip semi-finished product to form a wiper blade rubber strip product;
Step 4: lubricating the surface of the wiper blade rubber strip product, and coating the surface of the wiper blade rubber strip product with ink and then drying so that the surface of the wiper blade rubber strip product is formed with the lubricating protection layer 3.

It should be noted that the specific shape of the rubber strip body 1 and the blade portion 2 is not the focus of the present invention. The key point of the present invention is that the rubber strip body 1 and the blade portion 2 of the wiper blade rubber strip of the present invention are made of a first rubber material and a second rubber material respectively, and the blade portion 2 and the rubber strip body 1 are integrally formed by co-extrusion.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A wiper blade rubber strip, comprising a rubber strip body (1) made of a first rubber material and a blade portion (2) made of a second rubber material; the blade portion (2) being integrally formed with the rubber strip body (1) by co-extrusion.

2. The wiper blade rubber strip as claimed in claim 1, wherein the first rubber material has a Shore A hardness of 63-70 degrees, and the second rubber material has a Shore A hardness of 58-65 degrees.

3. The wiper blade rubber strip as claimed in claim 1, wherein the first rubber material is a silicone rubber, and the second rubber material is a fluorosilicone rubber.

4. The wiper blade rubber strip as claimed in claim 1, wherein the first rubber material has a color different from that of the second rubber material.

5. The wiper blade rubber strip as claimed in claim 4, wherein the color of the first rubber material is black, and the color of the second rubber material is white.

6. The wiper blade rubber strip as claimed in claim 4, wherein the blade portion has a height of 1-3 millimeters.

7. The wiper blade rubber strip as claimed in claim 1, wherein respective surfaces of the blade portion (2) and the rubber strip body (1) are coated with a lubricating protection layer (3).
